# EUROPEAN PATENT APPLICATION

(11) **EP 2 963 189 A1**
(43) Date of publication of application: **06.01.2016**
(21) Application number: 14175861.5
(22) Date of filing: 04.07.2014
(51) Int. Cl.: E02F 3/96, B23D 17/00, E04G 23/08

(54) **Work tool and method for operating the work tool**

(71) Applicant: Caterpillar Work Tools B. V., 5232 BJ 's-Hertogenbosch (NL)
(72) Inventor: Verschuur, Nick, 5236 RE EMPEL (NL); Van Koningsbrugge, Frank, 5231 LJ 's-HERTOGENBOSCH (NL); Van Amelsfoort, Edward, 5018 CZ TILBURG (NL); Grant, Patrick, 5045 ML TILBURG (NL); Van Gemert John, 5451 BT MILL (NL)
(74) Representative: Modiano, Micaela Nadia

(57) **Abstract**

A work tool (10) is disclosed. The work tool may have an increased jaw capacity. The work tool may comprise a jaw assembly (12) supported on the frame, the jaw assembly comprising an upper jaw (16) and a lower jaw (18), the upper and lower jaws contacting at an abutment plane (21); and a pivot axis (20) extending through the lower jaw (18) is offset from the abutment plane (21), the upper jaw (16) being pivotally coupled to the lower jaw (18) at the pivot axis (20).

## Description

### Technical Field

This disclosure relates to the field of work tools for crushing and/or cutting material and more particularly to the field of demolition and pulveriser tools having jaw assemblies for crushing and/or cutting material.

### Background

A work tool for crushing and/ or cutting material is generally known. Typically, the work tool may comprise a jaw assembly having a first jaw and a second jaw. The first and second jaws may be pivotally connected. The first and second jaws may be moveable relative to each other. Blades may be provided on both jaws.

Material may be crushed or cut by closing the jaw assembly such that the first and second jaws are moved towards each other. The jaw assembly may be opened and closed under hydraulic pressure from a hydraulic cylinder. The work tool may comprise a frame that connects the jaw assembly to a jib of a machine.

The work tool may have a jaw assembly that is suitable for crushing and pulverizing concrete and reinforced concrete structures. The work cycle of a jaw assembly may be the opening of the first and second jaws to collect material and closing of the jaws to crush and/ or pulverise the material. The cycle time for the jaw assembly may be dependent on the time taken to open and close the first and second jaws and to crush and pulverize the material.

JP2010133109A discloses a crushing machine adaptable to both an operation for crushing by cutting into large pieces and an operation for crushing by cutting into small pieces. The crushing machine has an arm that includes a base frame, a fixed jaw which is integrally elongated from the base frame, a movable jaw which can be opened/closed and which is rotatably attached to the base frame and an extended jaw which protrudes from/recedes into the leading end of the fixed jaw in synchronization with the opening/closing of the movable jaw.

US56644734 discloses a crusher having a frame with a pair of support plates and rotatably mounted on the bracket, a lock arm having a pair of arm plates and pivotally mounted between the pair of support plates. The lock arm may carry at one end thereof a crushing jaw. A movable arm may be mounted between the arm plates of the lock arm so as to be pivotable about a first axis that is nearer to the tip of the arm than a second axis about which the lock arm pivots. A trunnion type drive cylinder may be mounted between the arm plates for pivoting the movable arm toward and away from the crushing jaw. The drive cylinder may have pivots arranged on the second axis and pivotally supporting the lock arm. A fixing means may fix the lock arm to the frame at both ends of the pivoting motion of the pivot shaft about the second axis. The ends may be separated a predetermined angle from each other.

The present disclosure is directed, at least in part, to improving or overcoming one or more aspects of the prior art system.

### Brief Summary of the Invention

In a first aspect, the present disclosure describes a work tool comprising a jaw assembly supported on the frame, the jaw assembly comprising a upper jaw and a lower jaw, the upper and lower jaws contacting at an abutment plane; and a pivot axis extending through the lower jaw that is offset from the abutment plane, the first jaw being pivotally coupled to the lower jaw at the pivot axis.

In a second aspect, the present disclosure describes a method of operating the work tool. The method may comprise a jaw assembly, the jaw assembly having an upper jaw and a lower jaw, the upper and lower jaws contacting at a pivot axis; and pivoting the upper jaw pivotally coupled at the pivot axis, the pivot axis being positioned on the lower jaw offset from the contact axis.

### Brief Description of the Drawings

The foregoing and other features and advantages of the present disclosure will be more fully understood from the following description of various embodiments, when read together with the accompanying drawings, in which:
Fig. 1 is a side view of the work tool with the jaw assembly in the closed position according to the present disclosure; and
Fig. 2 is a side view of the work tool of Fig. 1 with the jaw assembly in the open position according to the present disclosure.

### Detailed Description

This disclosure generally relates to a work tool **10.** The work tool **10** may be supported on a work machine.

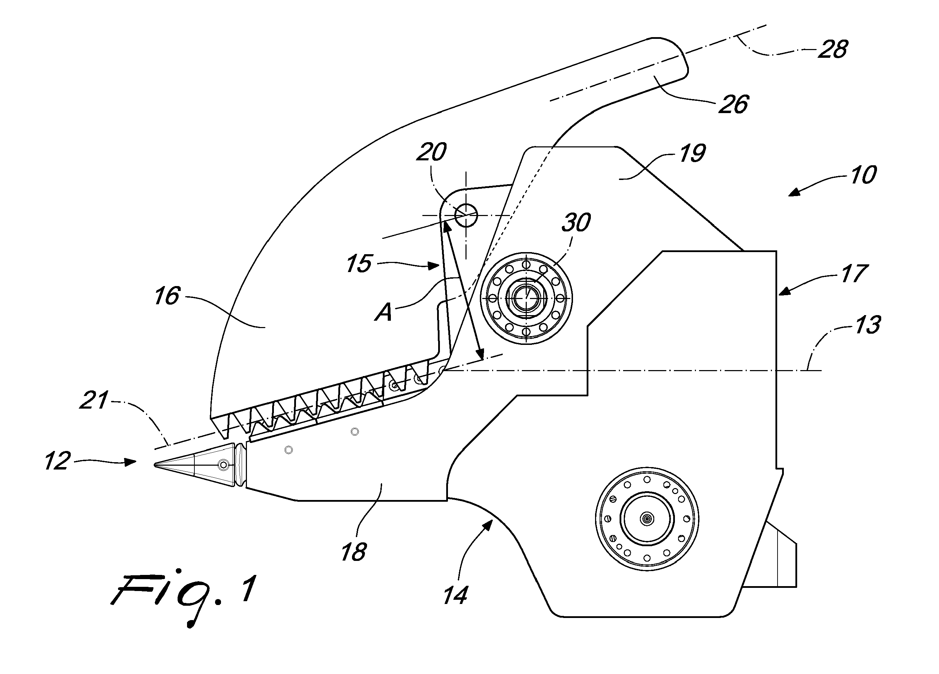

Fig. 1 illustrates a work tool **10.** The work tool **10** may comprise a jaw assembly **12.** The jaw assembly **12** may comprise a lower jaw **18** and an upper jaw **16.** The work tool **10** may comprise a pivot axis **20.** A frame **14** may be integral with the lower jaw **18.**

Frame **14** may support the jaw assembly **12.** Frame **14** may comprise attachment elements for housing components therein. Frame **14** may house a hydraulic cylinder (not shown) for actuating the jaw assembly **12.** The hydraulic cylinder may be connected to the frame **14** and to the jaw assembly **12.** In an embodiment, lower jaw **18** may house the hydraulic cylinder (not shown) for actuating the jaw assembly **12.** The hydraulic cylinder may be connected to the lower jaw **18** and to the upper jaw **16.**

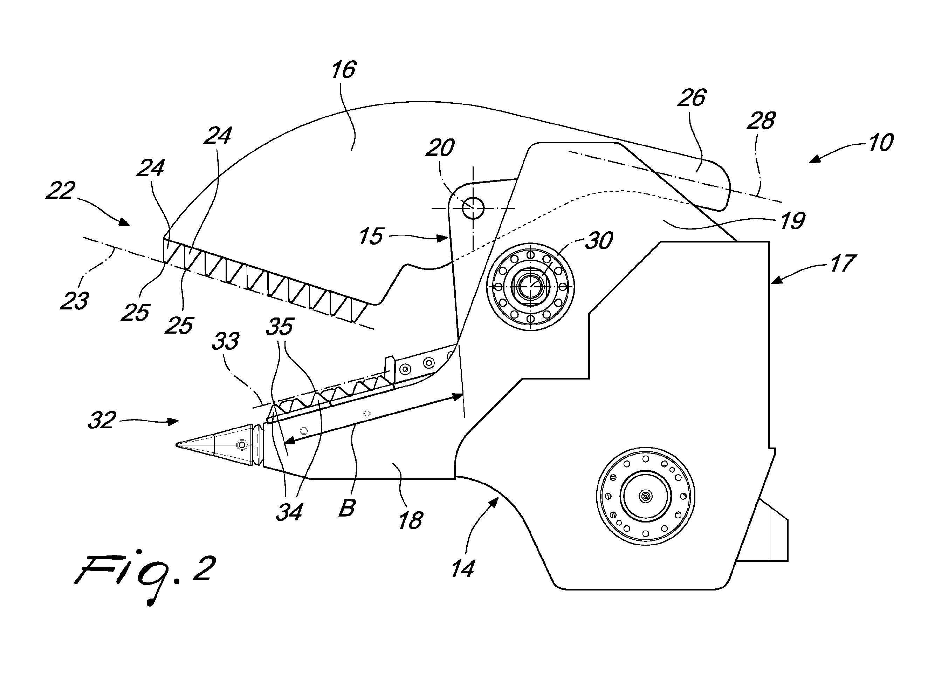

The hydraulic cylinder may actuate the jaw assembly **12** to open and close. Extraction of the hydraulic cylinder may actuate the jaw assembly **12** towards the closed position as illustrated in Fig. 1. Retraction of the hydraulic cylinder may actuate the jaw assembly **12** towards the open position as illustrated in Fig. 2.

The frame **14** or the lower jaw **18** may have an upper jaw connection end **15** for connection to the upper jaw **16** and a mounting end **17** for connection to a jib (not shown). Frame **14** may have a central axis **13.** Central axis **13** may extend to the lower jaw **18.** Central axis **13** may extend between the upper jaw connection end **15** and the mounting end **17.** At least a part of the jaw assembly **12** may extend from the upper jaw connection end **15** in alignment with the central axis **13.** In an embodiment, the extension of the part of the jaw assembly **12** may be parallel to the central axis **13.**

Frame **14** or the lower jaw **18** may have a hinge portion **19.** Hinge portion **19** may extend transversely away from the central axis **13.** Hinge portion **19** may comprise spaced apart plates. Hinge portion **19** may be coupled to the jaw assembly **12.** Jaw assembly **12** may be movable between a close and an open position about the hinge portion **19.** At least a part of the jaw assembly **12** may be coupled between the plates. At least a part of the jaw assembly **12** may be movable between the plates.

Pivot axis **20** may be located at the frame **14** or the lower jaw **18.** Pivot axis **20** may be transverse to the frame **14** or the lower jaw **18.** Pivot axis **20** may extend through the lower jaw **18** or the frame **14.** Pivot axis **20** may be perpendicular to the central axis **13.** Pivot axis **20** may be positioned on the lower jaw **18** or the frame **14** spaced from the central axis **13.** In an embodiment, pivot axis **20** may be positioned on the frame **14** spaced from the second jaw **18.**

Pivot axis **20** may be positioned between the upper jaw connection end **15** and the mounting end **17.** Pivot axis **20** may be positioned between the upper jaw connection end **15** and the hydraulic cylinder. Pivot axis **20** may be positioned between the upper jaw connection end **15** and the line of extraction and retraction of the hydraulic cylinder.

Pivot axis **20** may be positioned on the hinge portion **19.** Pivot axis **20** may be positioned adjacent an edge of the hinge portion **19.** Pivot axis **20** may be positioned adjacent the upper jaw connection end **15.**

The upper jaw **16** and the lower jaw **18** may be suitably provided for crushing concrete and/ or cutting iron sections. The upper jaw **16** may be pivotably coupled to the lower jaw **18** or the frame **14.** Upper jaw **16** may be pivotably coupled to the lower jaw **18** or the frame **14** at the pivot axis **20.** Upper jaw **16** may be coupled to the lower jaw **18**by a coupling pin (not shown) extending through the upper jaw **16** and the lower jaw **18** or the frame **14.** The coupling pin may be engaged to the lower jaw **18** or the frame **14** to pivotally hold the upper jaw **16.**

Upper jaw **16** may pivot about the pivot axis **20.** Upper jaw **16** may pivot between a first jaw position and a second jaw position. The first jaw position may correspond to the close position of the jaw assembly **12** and the second jaw position may correspond to the open position of the jaw assembly **12.** With reference to Fig. 1, the upper jaw **16** may be in the first jaw position. With reference to Fig. 2, the upper jaw **16** may be in the second jaw position. Upper jaw **16** may pivot relative to the lower jaw **18.** Upper jaw **16** may pivot relative to the frame **14.**

The pivoting path of the upper jaw **16** may be limited at the first jaw position and at the second jaw position. At the first jaw position, upper jaw **16** may be limited by abutting contact with the lower jaw **18.** At the first jaw position, upper jaw **16** may be limited by the hydraulic cylinder. The complete extraction of the hydraulic cylinder may correspond to the first jaw position. At the second jaw position, upper jaw **16** may be limited by the hydraulic cylinder. The complete retraction of the hydraulic cylinder may correspond to the second jaw position.

With reference to Fig. 2, at an end, upper jaw **16** may have an upper engagement portion **22.** The upper engagement portion **22** may contact material to be crushed and/ pulverised. The upper engagement portion **22** may lie on an upper engagement plane **23.** In an embodiment, the upper engagement portion **22** may have a series of teeth **24.** The free ends **25** of the teeth **24** may lie on the first engagement plane **23.** In an alternative embodiment, the upper engagement portion **22** may comprise cutters. The free ends of the cutters may lie on the upper engagement plane **23.** In a further alternative, the upper engagement portion **22** may comprise teeth and cutters.

Pivoting movement of the upper jaw **16** may move the upper engagement portion **22.** Upper engagement portion **22** may move along a rotational path. Each point of the plane of the upper engagement portion **22** may move along a rotational path. The upper engagement portion **22** may move between a first jaw position and a second jaw position. Upper engagement portion **22** may rotate relative to the lower jaw **18.** Upper engagement portion **22** may rotate relative to the frame **14.**

Pivoting movement of the upper jaw **16** may move the upper engagement plane **23.** Upper engagement plane **23** may move along a rotational path. The upper engagement plane **23** may move between a first jaw position and a second jaw position. Upper engagement plane **23** may rotate relative to the lower jaw **18.** Upper engagement plane **23** may rotate relative to the frame **14.**

With reference to Figs. 1 and 2, at an opposite end, upper jaw **16** may have a cylinder engagement portion **26.** Cylinder engagement portion **26** may be connected to the hydraulic cylinder (not shown). Cylinder engagement portion **26** may be connected to the piston rod head (not shown) of the hydraulic cylinder. In an alternate embodiment, cylinder engagement portion **26** may be connected to a bottom connection point (not shown) of the hydraulic cylinder. Cylinder engagement portion **26** may be an elongated extension of the upper jaw **16.** Cylinder engagement portion **26** may be a finger like extension. Cylinder engagement portion **26** may have an extension axis **28.**

Cylinder engagement portion **26** may be inclined relative to the upper engagement portion **22.** The extension axis **28** may be inclined to the first engagement plane **23.** The extension axis **28** may be inclined to the upper engagement portion **22.**

With the upper jaw **16** coupled to the hydraulic cylinder, extraction or retraction thereof may effect corresponding movement of the upper jaw **16.** Upper jaw **16** may be moved relative to the frame **14.** Extraction of the hydraulic cylinder may move the upper jaw **16** towards the first jaw position. Retraction of the hydraulic cylinder may move the upper jaw **16** towards the second jaw position.

Upper jaw **16** may be coupled to the frame **14** or the lower jaw **18** between the cylinder engagement portion **26** and the upper engagement portion **22.** In an embodiment, upper jaw **16** may be coupled to the frame **14** or the lower jaw **18** at a mid-point between the cylinder engagement portion **26** and the upper engagement portion **22.** Upper jaw **16** may be coupled to the frame **14** or the lower jaw **18** such that the pivot axis **20** may be located between the cylinder engagement portion **26** and the upper engagement portion **22.** Upper jaw **16** may have an arcuate shape. The upper engagement portion **22** may have a larger sectional dimension relative to the cylinder engagement portion **26.**

The lower jaw **18** may be coupled to the frame **14** and may be integral with the frame **14.** Lower jaw **18** may be coupled to the frame **14** at a position spaced from the pivot axis **20.** Second jaw **18** may be coupled to the frame **14** at a position adjacent to the central axis **13.** In an embodiment, the lower jaw **18** may be welded to the frame **14.**

In an embodiment, jaw assembly **12** may be coupled with frame **14** such that the pivot axis **20** may be located at an extension on second jaw **18.** First jaw **16** may connect pivotally to the extension on the second jaw **18** at the pivot axis **20.**

With reference to Fig. 2, at an end, lower jaw **18** may have a lower engagement portion **32.** The lower engagement portion **32** may contact material to be crushed and/ pulverised. The lower engagement portion **32** may lie on an lower engagement plane **33.** In an embodiment, the lower engagement portion **32** may have a series of teeth **34.** The free ends **35** of the teeth **34** may lie on the second engagement plane **33.** In an alternative embodiment, the lower engagement portion **32** may comprise cutters. The free ends of the cutters may lie on the lower engagement plane **33.** In a further alternative, the lower engagement portion **32** may comprise teeth and cutters.

With reference to Fig. 1, at the closed position, an abutment plane **21** may be positioned between the upper jaw **16** and the lower jaw **18.** The abutment plane **21** may be formed between the upper and lower engagement portions **22, 32.** The abutment plane **21** may be formed between the upper and lower engagement planes **23, 33.**

In an embodiment, the upper and lower jaws **16, 18** may contact at an abutment plane **21.** The abutment plane **21** may be formed at the contact of the upper and lower engagement planes **23, 33.** The abutment plane **21** may be formed at the contact of the upper and lower engagement portions **22, 32.** The abutment plane **21** may be located at the intersection of the teeth **24** of the upper engagement portion **22** and the teeth **34** of the lower engagement portion **32.** Abutment plane **21** may be inclined relative to the extension axis **28.**

With reference to Fig.1, the pivot axis **20** may have an offset distance **A** from the abutment plane **21.** The offset distance between pivot axis **20** and abutment plane **21** may be between 0.25 times jaw depth to 0.75 times a jaw depth **B** of the lower engagement portion 32. The offset distance between pivot axis **20** and abutment plane **21** may be between 0.35 times jaw depth to 0.65 times a jaw depth **B** of the lower engagement portion **32.** Jaw depth **B** may be defined as the distance of the lower engagement portion **32** from the cutting edge of the first implement that may be a tooth **24** or a cutter to the upper jaw connection end **15.** Jaw depth **B** may be measured from the first free end **25** of the first tooth **24** positioned on the lower jaw **18** furthest from the upper jaw connection end **15.** Jaw depth **B** of the lower engagement portion **32** may be measured parallel to abutment plane **21.** In an embodiment, offset distance **A** may be perpendicular to the jaw depth **B.** Offset distance **A** may be perpendicular to the jaw depth **B** extrapolated from the lower engagement portion **32.**

In an embodiment, jaw depth **B** may be defined as the distance of the lower jaw **18** from front edge **37** to the upper jaw connection end **15.** The offset distance between pivot axis **20** and abutment plane **21** may be between 0.3 times jaw depth to 0.7 times a jaw depth **B** of the lower jaw **18.**

Pivot axis **20** may be positioned on the frame **14** or the lower jaw **18** offset from the abutment plane **21.** Pivot axis **20** may be positioned on the lower jaw **18** or the frame **14** laterally offset from the abutment plane **21.** Pivot axis **20** may be positioned on the lower jaw **18** or the frame **14** transversely offset from the abutment plane **21.** In an embodiment, pivot axis **20** may be positioned on the lower jaw 18adjacent the upper jaw connection end **15** and spaced from the abutment plane **21.**

Pivot axis **20** may be positioned on the lower jaw **18** or the frame **14** offset to the intersection of the abutment plane **21** and the central axis **13.** Pivot axis **20** may be positioned on the frame **14** or the lower jaw **18** spaced from the intersection of the abutment plane **21** and the central axis **13.**

Pivot axis **20** may be positioned on the lower jaw **18** or the frame **14** spaced from the lower engagement plane **33.** Pivot axis **20** may be positioned on the lower jaw **18** or the frame **14** laterally offset from the lower engagement plane **33.** Pivot axis **20** may be positioned on the lower jaw **18** or the frame **14** transversely offset from the lower engagement plane **33.** In an embodiment, pivot axis **20** may be positioned on the frame **14** or the lower jaw **18** adjacent the upper jaw connection end **15** and spaced from the lower engagement plane **33.**

Pivot axis **20** may be positioned on the lower jaw **18** or the frame **14** offset to the intersection of the upper engagement plane **33** and the central axis **13.** Pivot axis **20** may be positioned on the lower jaw **18** or the frame **14** spaced from the intersection of the lower engagement plane **33** and the central axis **13.**

Pivot axis **20** may be positioned on the lower jaw **18** or the frame **14** spaced from the lower engagement portion **32.** Pivot axis **20** may be positioned on the lower jaw **18** or the frame **14** laterally offset from the lower engagement portion **32.** Pivot axis **20** may be positioned on the lower jaw **18** or the frame **14** transversely offset from the lower engagement portion **32.** In an embodiment, pivot axis **20** may be positioned on the lower jaw **18** or the frame **14** adjacent the upper jaw connection end **15** and spaced from the lower engagement portion **32.**

Lower jaw **18** may be fixedly coupled to the frame **14.** Lower jaw **18** may not move relative to the frame **14.** The jaw assembly **12** may be actuated between the closed and open positions by moving the upper jaw **16** relative to the lower jaw **18.** Jaw assembly **12** may be in the closed position with the upper jaw **16** moved to be in contact with the lower jaw **18.** Jaw assembly **12** may be in the open position with the upper jaw **16** moved away from the lower jaw **18.**

In an embodiment, lower jaw **18** may be pivotably coupled to the frame **14.** Lower jaw **18** may pivot about the connection axis **30.** Lower jaw **18** may pivot between a first jaw position and a second jaw position. The first jaw position may correspond to the close position of the jaw assembly **12** and the second jaw position may correspond to the open position of the jaw assembly **12.** The pivot axis **20** and the connection axis **30** may be parallel.

At the first jaw position, lower jaw **18** may be in contact with the upper jaw **16.** The lower jaw **18** may be moved under hydraulic pressure from the first jaw position to the second jaw position. Lower jaw **18** may be moved relative to the frame **14.** At the second jaw position, the lower jaw **18** may be disposed away from the upper jaw **16.**

With reference to Fig. 2, the capacity of the jaw assembly **12** may be defined by the relative distance between the upper engagement portion **22** and the lower engagement portion **32.** In particular, the capacity of the jaw assembly **12** may be defined by the relative distance between the first engagement plane **23** and the second engagement plane **33.**

The pivoting movement of the upper jaw **16** may define the rotational path of the upper engagement portion **22.** The upper engagement portion **22** may rotate relative to the lower engagement portion **32.** Upper engagement portion **22** may be in the rotation path when abutting contact is made with the lower engagement portion **32.** Rotational movement of upper engagement portion **22** while in contact with the lower engagement portion **32** may result in a grinding interaction between the upper engagement portion **22** and the lower engagement portion **32.**

The pivoting movement of the upper jaw **16** may define the rotational path of the upper engagement plane **23.** The upper engagement plane **23** may rotate relative to the lower engagement plane **33.**

The pivoting movement of the upper jaw **16** may move the upper engagement portion **22** to a distance from the lower engagement portion **32** with an increased capacity. The pivoting movement of the upper jaw **16** may move the upper engagement portion **22** to a distance from the lower engagement portion **32** with an increased capacity. The angle of inclination of the upper engagement portion **22** relative to the lower engagement portion **32** may increase as the upper jaw **16** is pivoted from the first jaw position to the second jaw position.

The work tool **10** may be operated by actuating the jaw assembly **12** by a hydraulic cylinder that is positioned in the frame **14** and connected to the upper jaw **16.** Retraction of the hydraulic cylinder may pivot the upper jaw **16** about the pivot axis **20** from the first jaw position towards the second jaw position. The upper engagement portion **22** may rotate relative to the frame **14** or the lower jaw **18** away from the lower engagement portion **32.** The upper jaw **16** may continue the pivoting movement up to the complete retraction of the hydraulic cylinder. The upper jaw **16** may be at the limit of the pivoting path at the second jaw position. The jaw assembly **12** may be at the largest capacity to pick up material for crushing and/ or pulverizing.

Extraction of the hydraulic cylinder may pivot the upper jaw **16** about the pivot axis **20** from the second jaw position towards the first jaw position. The upper engagement portion **22** may rotate relative to the frame **14** or the upper jaw **18** towards the lower engagement portion **32.** The upper jaw **16** may continue the pivoting movement up to abutting contact of the first and lower engagement portions **22, 32.** The rotational movement of the upper engagement portion **22** against the lower engagement portion **32** may effect a grinding of the material. The material may be crushed and/ or pulverised with the pivoting movement of the upper jaw **16** towards the lower jaw **18.**

The skilled person would appreciate that foregoing embodiments may be modified or combined to obtain the work tool **10** of the present disclosure.

### Industrial Applicability

This disclosure describes a work tool **10** for a work machine. The work tool **10** may enable work operations such as crushing and/ or pulverizing of an increased amount of work materials such as concrete, in a single work cycle. The work tool **10** may have a larger jaw opening and/ or capacity which enables more work material to undergo work operation in the same work cycle. A larger jaw capacity may enable bigger blocks of concrete to undergo work operations in a single work cycle.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A work tool (10) comprising:
a jaw assembly (12) comprising an upper jaw (16) and a lower jaw (18), the upper and lower jaws (16, 18) being movable between an open and a closed position wherein at the closed position an abutment plane (21) may be located between the upper and lower jaws (16, 18); and
a pivot axis (20) extending through the lower jaw (18) offset from the abutment plane (21), the upper jaw (16) being pivotally coupled to the lower jaw (18) at the pivot axis (20).

2. The work tool (10) of claim 1 wherein the pivot axis (20) is spaced from a lower engagement portion (32).

3. The work tool (10) of claim 2 wherein the pivot axis (20) is spaced from the lower jaw (18) in a direction substantially lateral to a central axis (13).

4. The work tool (10) of claim 2 or 3 wherein an off set distance (A) between pivot axis (20) and abutment plane (21) is between 0.25 to 0.75 a jaw depth distance (B) of the lower engagement portion (32).

5. The work tool (10) of any one of preceding claims wherein the abutment plane (21) may be formed at the contact between the upper and lower jaws (16, 18).

6. The work tool (10) of any one of preceding claims wherein the upper and lower jaws (16, 18) comprise upper and lower engagement planes (23, 33), the abutment plane (21) being formed at the contact of the upper and lower engagement planes (23, 33).

7. The work tool (10) of claim 6 wherein the upper and lower jaws (16, 18) comprise an upper engagement portion (22) and the lower engagement portion (32), the upper and lower engagement portions (22, 32) lying on the respective upper and lower engagement planes (23, 33).

8. The work tool (10) of claim 7 wherein the upper jaw (16) has a cylinder engagement portion (26) and wherein the pivot axis (20) is positioned between the cylinder engagement portion (26) and the upper engagement portion (22).

9. The work tool (10) of any one of preceding claims wherein the lower jaw (18) comprises a hinge portion (19) extending transversely away from the central axis (13), the pivot axis (20) being positioned on the hinge portion (19).

10. A method of operating the work tool (10), the method comprising:
providing a jaw assembly (12) comprising an upper jaw (16) and a lower jaw (18), the upper and lower jaws (16, 18) being movable between an open and a closed position wherein at the closed position an abutment plane (21) may be located between the upper and lower jaws (16, 18); and
pivoting the upper jaw (16) pivotally coupled at a pivot axis (20), the pivot axis (20) being positioned on the lower jaw (18) offset from the abutment plane (21).

11. The method of claim 8 wherein pivoting the upper jaw (16) from a first upper jaw position to a second upper jaw position increases the angle of inclination of upper engagement portion (22) of the upper jaw (16) relative to the lower engagement portion (32) of the lower jaw (18).
